# FASCICULE DE BREVET EUROPEEN

(11) **EP 3 545 449 B1**
(45) Date de publication et mention de la délivrance du brevet: **03.11.2021**
(21) Numéro de dépôt: 17804888.0
(22) Date de dépôt: 24.11.2017
(51) Int. Cl.: G06F 16/903, G06F 21/62, G06F 21/16

(54) **PROCÉDÉ D'EXTRACTION DE DONNÉES D'UNE BASE DE DONNÉES TATOUÉES SELON UN MÉCANISME DE TATOUAGE RÉVERSIBLE**
VERFAHREN ZUM EXTRAHIEREN VON DATEN AUS EINER DATENBANK, DIE NACH EINEM REVERSIBLEN WASSERZEICHENMECHANISMUS MIT WASSERZEICHEN VERSEHEN IST
METHOD OF EXTRACTING DATA FROM A DATABASE WATERMARKED ACCORDING TO A REVERSIBLE WATERMARKING MECHANISM

(30) Priorité: 25.11.2016 FR 1661520
(43) Date de publication de la demande: 02.10.2019
(73) Titulaire: Institut Mines-Télécom, 91120 Palaiseau (FR)
(72) Inventeur: COATRIEUX, Gouenou, 29290 Saint-Renan (FR); FRANCO CONTRERAS, Javier, 94270 Le Kremlin-Bicêtre (FR)
(74) Mandataire: Gevers & Orès
(86) Numéro de dépôt international: PCT/EP2017/080428
(87) Numéro de publication internationale: WO 2018/096126

(56) Documents cités:
- US-A1- 2004 243 816
- YEQING YI ET AL: "A digital watermarking approach to secure and precise range query processing in sensor networks", INFOCOM, 2013 PROCEEDINGS IEEE, IEEE, 14 avril 2013 (2013-04-14), pages 1950-1958, XP032440954, DOI: 10.1109/INFCOM.2013.6566995 ISBN: 978-1-4673-5944-3
- FRANCO-CONTRERAS JAVIER ET AL: "Robust Lossless Watermarking of Relational Databases Based on Circular Histogram Modulation", IEEE TRANSACTIONS ON INFORMATION FORENSICS AND SECURITY, IEEE, PISCATAWAY, NJ, US, vol. 9, no. 3, 1 mars 2014 (2014-03-01), pages 397-410, XP011538291, ISSN: 1556-6013, DOI: 10.1109/TIFS.2013.2294240 [extrait le 2014-01-28]
- Javier Franco Contreras: "Watermarking services for medical database content security", , 9 décembre 2014 (2014-12-09), XP055379883, Extrait de l'Internet: URL:https://hal.archives-ouvertes.fr/tel-0 1206279/document [extrait le 2017-06-06]

## Description

### Domaine de l'invention

Le domaine de l'invention est celui de la sécurité informatique et plus particulièrement la protection de jeux de données stockées par exemple sous la forme d'une base de données.

L'invention vise en particulier la prévention d'attaques cybercriminelles commises au sein des entreprises et institutions publiques par des employés ou collaborateurs autorisés à accéder aux informations stockées dans des bases de données. Il s'agit notamment du détournement, de la fuite, du vol ou de la dégradation volontaire ou involontaire de ces informations. De telles attaques représentent aujourd'hui environ 43% des incidents recensés en matière de cybercriminalité.

### Art antérieur

Afin d'assurer la traçabilité des données extraites et de certifier l'authenticité de la personne ayant extrait ces données, il est connu de tatouer l'intégralité des données contenues dans un jeu de données, par exemple stocké sous la forme d'une base de données, le tatouage laissant l'utilisateur accéder à l'information tout en la maintenant protégée par une marque.

Par définition, le tatouage de données fait référence à une technique consistant à insérer dans les données à protéger (dites données source ou « hôtes ») une marque (*watermark* en anglais). Les données dans lesquelles la marque a été insérée sont dites tatouées.

La marque est un message contenant des attributs de sécurité, tels qu'une signature ou un code d'authentification, permettant au propriétaire d'une base de données de tracer les utilisateurs qui accèdent à ces données, ou de vérifier l'intégrité de ces dernières.

La propriété de réversibilité est une caractéristique propre à certaines modulations de tatouage offrant la possibilité d'enlever la marque des données tatouées et de récupérer les données originales, i.e. avant l'application du tatouage.

Des méthodes de tatouage robuste et réversible de données ont été présentées par J. Franco-Contreras, G. Coatrieux, F. Cuppens, N. Cuppens-Boulahia, E. Chazard et C. Roux dans « Tatouage Robuste et Réversible pour la Traçabilité de Bases de Données Relationnelles en Santé », au congrès Recherche en Imagerie et Technologies pour la Santé (RITS) en Avril 2013 à Bordeaux en France.

Le document US2004/243816 divulgue la modification de requêtes de recherche dans une base de données chiffrées. Le client faisant la recherche modifie la recherche faite dans la base de données pour inclure des plages de valeurs au lieu des comparaisons de valeurs. Le serveur retourne une liste de tuples plus importante de valeurs chiffrées qui est filtrée par le client après déchiffrage des valeurs de ces attributs.

De manière classique, l'extraction de données dans un ou plusieurs jeux de données, en particulier dans une base de données, nécessite des opérations de tatouage/détatouage portant sur l'intégralité du ou des jeux de données pour pouvoir rendre un résultat fiable, en réponse à une requête d'extraction émise par un utilisateur ayant les droits pour accéder à cette base de données.

Par la suite, on parlera de base de données qui est une forme particulière de structuration d'un ou plusieurs de jeux de données, mais bien évidemment, le reste de la description pourra également s'appliquer indifféremment à des bases de données et en particulier à des bases de données relationnelles.

Compte-tenu des capacités de traitement (mémoire, processeurs) limitées des systèmes de gestion de bases de données actuels, ces opérations de tatouage/détaouage sont particulièrement désavantageuses pour l'extraction de données, car elles nécessitent des temps de traitement non négligeables alors que la taille des données des données à extraire est en général relativement faible (quelques kilo-octets) en comparaison avec la capacité de la base de données (plusieurs Téraoctets). Par ailleurs, le détaouage intégral de la base de données, même s'il est temporaire, doit être évité pour des raisons de sécurité.

Par conséquent, il existe donc un besoin d'extraire, en un minimum de temps, des données contenues dans une base de données tatouées selon un mécanisme de tatouage réversible. L'extraction des données doit être réalisée de manière transparente pour l'utilisateur et façon optimisée et fiable, comme si l'extraction était faite sur la base de données non tatouées.

### Objet et résumé de l'invention

La présente invention offre une solution qui répond au problème technique mentionné ci-dessus en proposant un procédé d'extraction de données par un serveur dans une base de données tatouées selon la revendication 1.

Le procédé selon l'invention permet avantageusement de réduire le temps nécessaire à l'extraction de données dans une base de données tatouées, en évitant de détatouer l'intégralité de la base de données. La transformation des conditions de sélection portant sur des attributs tatoués permet de détatouer seulement un sous-ensemble tuples de la base en tenant compte des modifications apportées aux valeurs des attributs tatouées selon la force de marquage. L'application de la troisième requête permet d'obtenir la réponse à la requête d'extraction initiale d'un utilisateur sur un sous-ensemble de tuples comme s'il l'avait appliquée sur des données non-tatouées.

Préférentiellement, la deuxième requête d'extraction comprend au moins une condition de sélection portant sur un attribut non tatoué présente dans la première requête d'extraction.

Etant donné que les valeurs des attributs non tatoués n'ont pas été modifiées lors de l'insertion des données dans la base de données, toute condition de sélection portant sur un tel attribut peut être appliquée directement à la base de données tatouées sans risque d'erreur.

Selon une autre caractéristique de l'invention, lesdites données ont été préalablement tatouées lors de leur insertion dans la base de données en modifiant la valeur dudit au moins un attribut tatoué selon une force de marquage α non nulle, ledit au moins un attribut tatoué A est de type numérique et ladite au moins une condition de sélection initiale par rapport audit au moins un seuil S est transformée en fonction de ladite force de marquage α renseignée dans les métadonnées de tatouage selon l'un quelconque des cas suivant :
- si ladite condition initiale est de type A > S ou A ≥ S, celle-ci est transformée en A > S - α ou A ≥ S - α respectivement ;
- si ladite condition initiale est de type A < S ou A ≤ S, celle-ci est transformée en A < S + α ou A ≤ S + α respectivement;
- si ladite condition initiale est de type S1≤A≤S2, celle-ci est transformée en A≥S1-α et A≤S2+α ;
- si ladite condition initiale est de type S1<A<S2, celle-ci est transformée en A>S1-α et A≤S2+α ;
- si ladite condition initiale est de type A=S, celle-ci est transformée en A = S + α ou A = S ― α ;.
- si ladite condition initiale est de type A≠S, celle-ci est transformée en A ≠ S + α ou A ≠ S ― α.

Selon une autre caractéristique de l'invention, ledit au moins un attribut tatoué A est de type catégoriel et ladite au moins une condition de sélection initiale est transformée en au moins deux sous-conditions effectuant la sélection de tuples par rapport à des valeurs catégorielles déterminées en fonction d'une règle de tatouage prédéfinie dans les métadonnées de tatouage.

Selon une autre caractéristique de l'invention, la deuxième requête d'extraction comprend au moins une fonction d'agrégation portant sur un attribut non tatoué présente dans la première requête d'extraction.

Etant donné que les valeurs des attributs non tatoués n'ont pas été modifiées lors de l'insertion des données dans la base de données, toute fonction d'agrégation portant sur un tel attribut peut être appliquée directement à la base de données tatouées sans risque d'erreur.

Selon une autre caractéristique de l'invention, en présence dans ladite première requête d'extraction d'au moins une fonction d'agrégation portant sur un attribut tatoué, ladite au moins une fonction d'agrégation est exclue de ladite deuxième requête d'extraction mais incluse dans la troisième requête et l'attribut tatoué sur lequel porte ladite au moins une fonction d'agrégation est inséré dans la deuxième requête d'extraction en tant qu'attribut de sélection.

Les fonctions d'agrégation sont appliquées sur les données extraites seulement après l'étape de détatouage pour éviter toute erreur d'extraction. En effet, le résultat d'une fonction d'agrégation portant sur un attribut tatoué risquerait de rendre un résultat erroné compte-tenu de la force de marquage utilisée.

Selon une autre caractéristique de l'invention, la base de données est une base de données relationnelle comprenant une clé primaire et la deuxième requête de sélection comprend ladite clé primaire en tant qu'attribut de sélection.

Selon une autre caractéristique de l'invention, le procédé comprend en outre une étape de tatouage, lors de laquelle les données extraites détatouées issues de l'étape de filtrage ou transformation sont tatouées avant l'étape d'envoi.

Le tatouage des données extraites avant leur envoi permet avantageusement de renforcer la protection des données contre les fraudes commises par des personnes autorisées à accéder à la base de données tatouée. Le tatouage consiste à dissimuler dans les données extraites un ou plusieurs messages par le biais d'une technique de tatouage réversible ou irréversible, cette technique pouvant être différente de celle utilisée pour tatouer les données des tuples lors de leur insertion dans la base de données.

Selon une autre caractéristique de l'invention, le tatouage des données comprend l'insertion, dans les données extraites détatouées, d'au moins un identifiant d'un utilisateur ayant émis la première requête d'extraction et/ou d'au moins une signature et/ou d'informations de traçabilité.

L'insertion de l'identifiant de l'utilisateur dans les données extraites permet avantageusement d'authentifier/identifier la personne à l'origine de la première requête d'extraction.

L'insertion d'une information de traçabilité dans les données extraites permet avantageusement de certifier la provenance des données extraites (e.g. propriétaire de la base de données) ou de déterminer des durées autorisées d'exploitation des données. Parmi les informations de traçabilité peut également figurer un identifiant du serveur auquel la base de données est attachée, ce qui est particulièrement avantageux pour prévenir le vol d'informations sensibles.

La signature peut être également adaptée pour vérifier a posteriori l'intégrité des données dès lors que celles-ci ont été extraites de la base de données, ce qui est particulièrement avantageux détecter le cas où les données extraites auraient été falsifiées.

Dans un mode particulier de réalisation, les étapes du procédé précité sont déterminées par des instructions de programmes d'ordinateurs.

En conséquence, l'invention vise aussi un programme d'ordinateur sur un support d'informations, ce programme étant susceptible d'être mis en oeuvre par un microprocesseur, ce programme comprenant des instructions adaptées à la mise en oeuvre des étapes du procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un microprocesseur, et comprenant des instructions d'un programme d'ordinateur tel que mentionné ci-dessus. Ce support d'informations peut être un moyen de stockage d'informations, amovible ou non, partiellement ou totalement lisible par un ordinateur ou un microprocesseur.

Le support d'informations peut être n'importe quelle entité ou dispositif capable de stocker le programme. Par exemple, le support peut comprendre un moyen de stockage, tel qu'une ROM, par exemple une ROM de microcircuit, ou encore un moyen d'enregistrement magnétique, par exemple un disque dur, ou encore une mémoire flash.

Par ailleurs, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur une plateforme de stockage d'un réseau de type Internet.

Alternativement, le support d'informations peut être un circuit intégré dans lequel le programme est incorporé, le circuit étant adapté pour exécuter ou pour être utilisé dans l'exécution du procédé en question.

Le support d'informations et le programme d'ordinateur précités présentent des caractéristiques et avantages analogues au procédé qu'ils mettent en oeuvre.

L'invention concerne également un serveur adapté pour exécuter les instructions adaptées à la mise en oeuvre des étapes du procédé selon l'invention.

D'autres particularités et avantages de l'invention apparaîtront encore dans la description ci-après en relation avec les dessins annexés, donnés à titre d'exemples non limitatifs :
- la **figure 1** illustre schématiquement les étapes du procédé selon un mode de réalisation l'invention, et
- la **figure 2** illustre schématiquement un système client-serveur adapté à mettre en oeuvre le procédé selon l'invention.

### Définitions

Par la suite, on désignera par base de données relationnelle une structure de données composée d'un nombre fini de relations ou tables. Chaque table ou relation est une structure de base, regroupant des données sur un sujet précis, tel que le séjour des patients dans un hôpital.

Chaque table ou relation comprend un ensemble de N tuples non ordonnés {tᵤ} avec N et u désignant un entier naturel, où 1 ≤ u ≤ N, où chaque tuple tᵤ comprend une pluralité de M attributs désignés {A₁, A₂,...,Aₙ, ..., A_{M}}, M désignant un entier naturel. Chaque attribut Aₙ prend des valeurs comprises dans un domaine d'attributs donné. La valeur du n^{ième} attribut du u^{ième} tuple est désignée par tᵤ.Aₙ. Chaque tuple est identifié de manière unique par une clé primaire tᵤ.PK désignant un attribut ou un ensemble d'attributs ou le résultat d'une fonction appliquée à un ensemble d'attributs. On désignera par données, tout type d'information numérique pouvant être contenu dans une base de données, en particulier de type relationnelle.

A titre d'exemple illustratif et non limitatif, on considèrera ci-après une seule table désignée par l'identifiant *Table* comprenant des informations relatives aux séjours de patients dans un hôpital, à partir de laquelle un utilisateur extrait des données. Les attributs de cette table comprennent notamment l'identifiant du séjour « *id_sejour »,* l'âge *« Age* », le sexe « *Sexe* » et la durée de séjour « *Duree_sejour* » des patients ayant séjournés à l'hôpital. Ainsi, un enregistrement de cette table est constitué par un tuple comprenant l'ensemble des valeurs des attributs *id_sejour, Age, Sexe, Duree_sejour* relatives à un séjour donné, comme représenté schématiquement dans le Tableau 1 ci-dessous qui comprend N tuples, où chaque tuple correspond à une ligne du tableau.

Dans cet exemple, l'attribut *Sexe* prend une valeur comprise parmi l'ensemble {Male, Female} tandis que l'attribut *Age* prend une valeur numérique comprises dans l'intervalle [0-110]. La clé primaire est constituée par l'attribut *id_sejour* qui permet d'extraire les informations relatives à un séjour particulier parmi l'ensemble des séjours enregistrés dans la table.

**Tableau 1. Exemple de table : Table**

| *id_sejour* | *Age* | *Sexe* | *Duree_sejour* |
|---|---|---|---|
| Id1 | 13 | Male | 10 |
| ... | ... | ... | ... |
| IdN | 40 | Female | 5 |

Par définition, on désignera par tatouage réversible toute technique de marquage numérique des données ayant la capacité de supprimer desdites données une marque préalablement insérée pour tatouer les données, de manière à récupérer les données originales, c'est-à-dire les données avant application du tatouage.

Ainsi, on désignera par mécanisme de tatouage réversible toute technique ou ensemble de techniques mises en oeuvre par des moyens logiciels aptes à insérer et supprimer une marque dans des données.

Lors de l'opération de tatouage, l'insertion de la marque consiste à modifier les valeurs de certains attributs Aₙ de la base de données selon une force de marquage ±αₙ ou force d'insertion (c'est-à-dire la modification effectuée sur chaque valeur des attribués tatoués pour y dissimuler la marque). Par la suite, les termes "force d'insertion" et "force de marquage" seront utilisés indifféremment pour désigner la même grandeur. La force de marquage αₙ peut être différente pour chaque attribut tatoué.

De manière générale, l'insertion d'une marque relative au tatouage nécessite que la force d'insertion ait une valeur non nulle. Ainsi, la valeur d'un attribut tatoué Aₙ de type numérique sera modifiée d'une quantité non nulle égale à ± αₙ où αₙ désigne un nombre non nul 0. Par exemple, ce nombre peut être un entier ou un nombre réel, positif ou négatif, en fonction de la nature de l'attribut considéré.

Dans le présent exemple, l'âge du patient est un attribut tatoué avec une force de marquage α égale à ±3. Pour le tuple identifié par Id1 dans la base de données tatouée, la valeur de l'âge du patient est égale à 13, sachant que la valeur originale de cet attribut tatoué est égale à 10 ou à 16, selon sa force de marquage ou d'insertion.

Les métadonnées de tatouage M comprennent des informations définissant le mécanisme de tatouage réversible mis en oeuvre.

En particulier, ces métadonnées comprennent les paramètres du processus d'insertion de la marque dans les données à tatouer, telles que la force de marque ou d'insertion utilisée pour modifier la valeur des attributs tatoués lors de l'insertion de la marque, les valeurs maximales et minimales des attributs tatoués, les valeurs de séquences insérées dans les données.

Les métadonnées comprennent également des données indépendantes de la méthode de tatouage considérée. Elles indiquent, par exemple, les attributs tatoués, le ou les attributs qui composent la clé primaire de la relation, les identifiants tatoués, le mode de calcul de signatures numériques, etc.

### Description détaillée d'un mode de réalisation

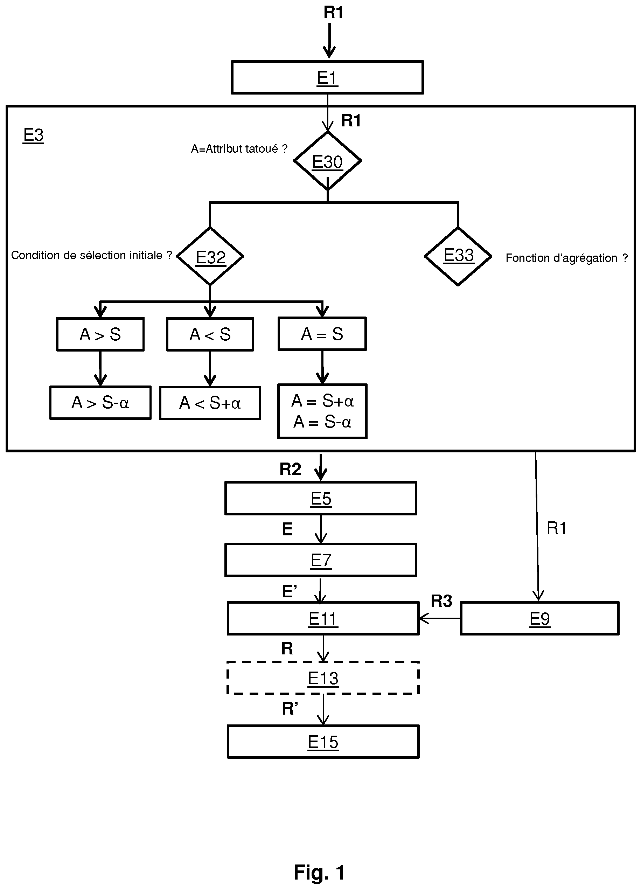

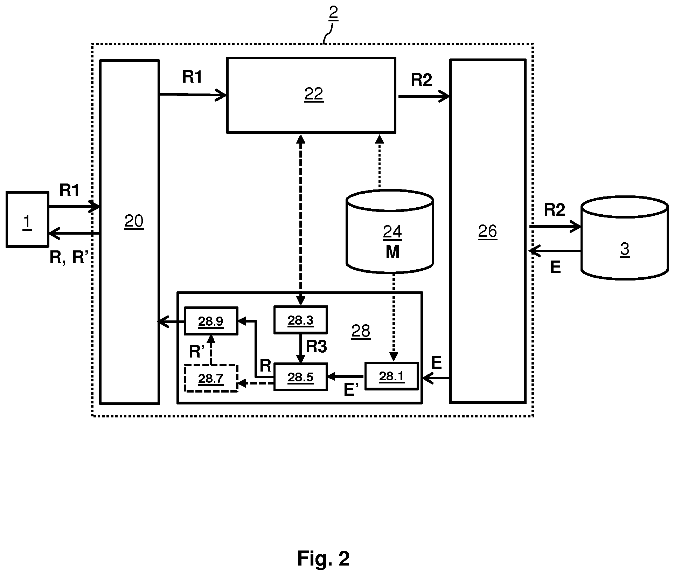

Un mode de réalisation de l'invention va être décrit conjointement en référence aux **figures 1** **et** **2** qui illustrent respectivement les étapes du procédé d'extraction de données et un système destiné à mettre en oeuvre ledit procédé selon un mode de réalisation de l'invention.

Sur le plan matériel, le procédé d'extraction selon l'invention est mis en oeuvre au niveau d'un système dit «client-serveur» comprenant un client 1, un serveur 2 adapté à communiquer avec le client et une base de données tatouées 3. Plus particulièrement, les étapes du procédé selon l'invention sont mises en oeuvre par un ou plusieurs serveurs, notamment le serveur 2. La base de données tatouées 3 peut être distante du serveur 2, notamment pour des raisons de sécurité.

On suppose que la base de données 3 comprend des données qui ont été préalablement tatouées, lors de leur insertion dans la base de données, selon un mécanisme de tatouage réversible défini par des métadonnées de tatouage M. Dans le présent exemple, ces métadonnées sont stockées dans un espace de stockage 24 au sein du serveur 2 destiné à mettre en oeuvre le procédé selon l'invention.

Le client 1 est mis en oeuvre dans un terminal d'un utilisateur, tel qu'un ordinateur, un téléphone portable, une tablette, ou tout autre type de dispositif adapté à communiquer avec le serveur 2 via un réseau de télécommunications (non représenté).

Le serveur 2 est mis en oeuvre dans tout type d'ordinateur adapté à lire et extraire des données de la base de données 3 en réponse à des requêtes d'extraction émises par le client pour obtenir des données de la base de données 3. De manière classique, le serveur 2 comprend une unité de traitement composée d'au moins un processeur possédant un ou plusieurs coeurs de calcul. Cette unité est en charge de l'exécution des programmes informatiques s'exécutant sur le serveur et en particulier un programme informatique comprenant les instructions nécessaires pour la mise en oeuvre du procédé selon l'invention. L'unité de traitement est connectée à un ensemble de périphériques aux travers de bus de communication. Les périphériques comprennent au moins un module de mémoire vive constituant une mémoire volatile de travail destinée à stocker les programmes en cours d'exécution et les données sur lesquelles travaillent ces programmes telle que des requêtes, des données extraites de base de données. L'unité de traitement est également connectée via le bus à un module d'entrée/sortie réseau qui connecte le serveur à un réseau de communication. D'autres périphériques tels qu'un disque SSD (*Solid State Drive* en anglais) ou disque mémoire flash peuvent être connectés à ce même bus. Le bus peut être dans les machines actuelles le bus PCIe (PCI Express). L'unité de traitement est également connectée via un second bus de communication à d'autres périphériques tels que des unités de stockage permanent comme des disques durs, d'autres périphériques d'entrée/sortie comme une interface USB, etc.

Par la suite, on désignera par requête d'extraction toute commande formulée selon un langage informatique donné pour extraire, de manière sélective, des enregistrements ou tuples répondant à certains critères de sélection ou filtrage, tels que des conditions de sélection et/ou des fonctions d'agrégation portant sur un ou plusieurs attributs d'une relation ou d'une table.

Dans les différents exemples qui seront traités ci-après, le langage utilisé pour la formulation et l'exécution des requêtes d'extraction de données est le langage SQL (*Structured Query Language*). Ce langage largement utilisé pour la gestion des bases de données est particulièrement bien adapté aux bases de données relationnelles. Dans le cas présent, on suppose que le serveur 2 est adapté à traiter des requêtes SQL préalablement générées et émises par le client 1 de type SQL ou compatible avec le langage SQL installé sur le terminal de l'utilisateur souhaitant extraire des données.

On notera que l'usage du langage SQL est donné uniquement à titre d'exemple illustratif mais qu'il ne présente aucun caractère limitatif pour l'invention. Bien évidemment, l'Homme du Métier pourra adapter, selon ses connaissances générales et l'évolution des technologies, les exemples présentés ci-après, à tout autre type de langage approprié pour l'extraction de données dans des bases de données, notamment de type relationnel, tout en restant dans le cadre de la présente invention.

Par la suite, on désignera par condition de sélection, toute condition portant sur la comparaison de la valeur d'un attribut A par rapport à au moins un seuil prédéterminé S au moyen de l'un quelconque des opérateurs de comparaison suivants :
« > » (strictement supérieur à) : condition de type A>S
« ≥ » (supérieur ou égal à) : condition de type A≥S
« < » (strictement inférieur à) : condition de type A<S
« ≤ » (inférieur ou égal à) : condition de type A≤S
« = » (égal à) : condition de type A=S
« != » (différent de) : condition de type A !=S
« BETWEEN » (compris entre) : condition de type A BETWEEN S1 AND S2 (signifiant que la valeur de l'attribut A est comprise entre S1 et S2 où S1 et S2 désignent deux seuils numériques).

On notera que pour l'opérateur BETWEEN, certains systèmes incluent les valeurs qui définissent l'intervalle, i.e. S1 et S2, tandis que d'autres systèmes excluent ces valeurs.

Ces opérateurs définis dans le langage SQL sont donnés à titre d'exemple et s'appliquent à des attributs numériques. D'autres types d'opérateurs s'appliquant à des attributs catégoriels pourront également être considérés tels que LIKE permettant de rechercher des enregistrements dont la valeur d'une colonne commence par une lettre ou un caractère donné. Par la suite, on désignera par fonction d'agrégation, toute fonction de calcul opérant sur un ou plusieurs attributs. Il peut s'agir de fonctions de type statistique, telles que le calcul de la somme SUM(), de la moyenne AVG(), de l'écarttype, du nombre de tuples dans une table COUNT() ou la détermination d'une valeur maximale MAX() ou minimale MIN() parmi un ensemble de valeurs.

### Exemples

A titre d'exemples illustratifs non limitatifs, un mode de réalisation de l'invention sera décrit en relation aux trois exemples suivant :
- dans un premier exemple, un utilisateur souhaite connaître l'ensemble des enregistrements pour lesquels les patients sont restés exactement 10 jours à l'hôpital ;
- dans un deuxième exemple, un utilisateur souhaite connaître les identifiants des séjours pour lesquels les patients sont restés plus de 10 jours à l'hôpital ;
- dans un troisième exemple, un utilisateur souhaite connaître l'âge maximum des patients de sexe masculin ayant séjourné moins de 10 jours à l'hôpital.

Ces exemples ont été choisis de manière à mettre en évidence différentes variantes de mise en oeuvre du mode de réalisation de l'invention décrit sans caractère limitatif. Ainsi, d'autres exemples pourront être envisagés par l'Homme du Métier conformément au principe de l'invention.

Pour chacun des exemples énoncés ci-dessus, on suppose qu'un client 1 émet une première requête d'extraction R1 à destination du serveur 2 pour extraire des données de la base de données tatouées 3. La première requête d'extraction R1 a pour objet de sélectionner un sous-ensemble de tuples dans la base de données 3, selon une condition de sélection initiale portant sur un attribut tatoué, par exemple, l'attribut *Durée_séjour*, tel que renseigné dans les métadonnées de tatouage M.

Dans ces exemples, on suppose que les attributs *Duree_sejour* et *Age* sont des attributs tatoués avec une force de marquage α₁, α₂, égale à ±2 et ±3 respectivement, de sorte que les valeurs de ces attributs ont été modifiées de ±2 et ±3 respectivement, lors de l'insertion des données dans la base de données consistant au tatouage préalable. La déclaration de ces attributs tatoués en association avec leur force de marquage respective α₁, α₂, constitue une information relative au mécanisme de tatouage qui est contenue dans les métadonnées de tatouage M.

En langage SQL, une requête d'extraction est généralement formulée de la manière suivante :
**R1** : SELECT *Attributs, Fonction(s) d'agrégation* FROM *Table* WHERE *Conditions*
La commande SELECT *Attributs* a pour fonction de sélectionner les attributs désignés par *Attributs* parmi les tuples de la table désignée par *Table* au moyen de l'opérateur FROM. La sélection peut également inclure une ou plusieurs fonctions d'agrégation, chaque fonction d'agrégation pouvant porter sur un ou plusieurs attributs de ladite table. La commande WHERE *Conditions* est utilisée pour limiter le nombre d'enregistrements en fixant des conditions de sélection *Conditions* portant sur un ou plusieurs attributs. De manière générale, la première requête d'extraction est de la forme suivante:
Dans l'exemple 1, la première requête d'extraction R11 est formulée dans le langage SQL, selon l'exemple suivant :
**R11** : SELECT ^{∗} FROM *Table* WHERE ***Duree_sejour* = 10**
où tous les attributs sont sélectionnés parmi les tuples contenus dans la table *Table*, pour lesquels la valeur de l'attribut *Duree_sejour* est exactement égale à un seuil S fixé à 10 jours. Dans ce cas, la condition de sélection initiale est *Duree_sejour* = 10. Ainsi la première requête R11 permet de sélectionner un premier ensemble de tuples dans la base de données 3 selon la condition de sélection.

Dans cet exemple, tous les attributs ont été sélectionnés au moyen de l'opérateur ^{∗}, mais dans d'autres exemples, cet opérateur pourra être remplacé par un ou plusieurs attributs à sélectionner en particulier.

Dans l'exemple 2, la première requête d'extraction R12 est formulée, dans le langage SQL, selon l'exemple suivant :
**R12** : SELECT *Id_sejour* FROM *Table* WHERE ***Duree_sejour* > 10** où sont sélectionnés les identifiants des séjours contenus dans la table *Table* pour lesquels la valeur de l'attribut tatoué *Durée_séjour* est strictement supérieure à un seuil S fixé à 10 jours. L'attribut *Id_sejour* est désigné en tant qu'attribut de sélection (ou attribut à sélectionner). Ainsi, la première requête R12 permet de sélectionner un premier ensemble de tuples dans la base de données 3, selon la condition de sélection *Durée_séjour* > 10.

Dans l'exemple 3, la première requête d'extraction R13 est formulée, dans le langage SQL, selon l'exemple suivant :
**R13** : SELECT *Max(Age)* FROM *Table* WHERE *Sexe*='Male' AND ***Duree_sejour* < 10** où est sélectionnée la valeur maximale de l'âge, i.e. *Max(Age)* des patients de sexe masculin, i.e. *Sexe*='*Male*' parmi les tuples de la table *Table* et pour lesquels la valeur de l'attribut tatoué *Duree_sejour* est strictement inférieure à un seuil S fixé à 10 jours.

Ainsi, la première requête R13 a pour objet de sélectionner un premier ensemble de tuples dans la base de données 3, selon les deux conditions de sélection *Duree_sejour* < 10 et *Sexe*='Male'. On notera que la condition de sélection *Sexe*='Male' porte sur l'attribut *Sexe* qui n'est pas un attribut tatoué.

La requête R13 comprend en outre une fonction d'agrégation *Max()* portant sur l'attribut tatoué *Age.* Ainsi, ce premier ensemble de tuples ne contient qu'un seul tuple contenant lui-même un seul attribut (i.e. la valeur maximale de l'âge des patients de sexe masculin ayant séjourné moins de 10 jours à l'hôpital).

Par souci de simplification, une seule condition de sélection initiale portant sur un attribut tatoué a été décrite dans la première requête d'extraction R1, mais l'Homme du Métier comprendra que l'invention s'applique, bien évidemment, au cas où cette requête comprendrait au moins une, en particulier plusieurs, conditions de sélection initiales.

Lors d'une étape de réception **E1**, la première requête d'extraction R1 est reçue par le serveur 2 et plus particulièrement par un module de réception ou d'interception des requêtes 20 mis en oeuvre dans ledit serveur.

Sur réception de la première requête d'extraction R1, le serveur 2 génère une deuxième requête d'extraction R2, lors d'une étape de génération ou d'obtention **E3**. Pour cela, le serveur met en oeuvre un module de ré-écriture des requêtes 22 qui, à partir de la première requête d'extraction R1, génère la deuxième requête d'extraction R2 comprenant une condition de sélection obtenue par transformation de la condition de sélection initiale portant sur l'attribut tatoué *Duree_sejour.*

Pour cela, le module de ré-écriture 22 peut inclure, de manière générale, la mise en oeuvre d'une étape d'analyse préalable de la première requête d'extraction R1, en fonction des métadonnées de tatouage M, pour détecter la présence éventuelle d'attributs tatoués dans ladite première requête d'extraction R1.

En cas de détection d'un ou plusieurs attributs tatoués, le module de ré-écriture 22 détermine si des conditions de sélection initiales et/ou des fonctions d'agrégation portant sur les attributs tatoués, identifiés lors de l'étape d'analyse, sont présentes dans la première requête d'extraction R1. Dans l'affirmative, ces conditions de sélection et/ou fonctions d'agrégation sont mémorisées dans un élément de mémoire du serveur (par exemple, une mémoire vive de type RAM).

De manière générale, en présence dans la première requête d'extraction R1,
- d'une condition de sélection initiale portant sur un attribut non tatoué, cette condition est incluse, sans modification, dans la deuxième requête d'extraction R2 ;
- d'une condition de sélection initiale portant sur un attribut tatoué, cette condition transformée avant d'être incluse dans la deuxième requête d'extraction R2, et l'attribut tatoué sur lequel porte cette condition est désigné comme attribut de sélection dans la deuxième requête d'extraction R2 ;
- d'une fonction d'agrégation portant sur un attribut non tatoué, cette fonction est incluse, sans modification, dans la deuxième requête d'extraction R2 ;
- d'une fonction d'agrégation portant sur un attribut tatoué, cette fonction est exclue de la deuxième requête d'extraction R2, mais l'attribut tatoué sur lequel porte cette fonction est désigné comme attribut de sélection dans la deuxième requête d'extraction R2.

De manière générale, en présence dans la première requête d'extraction R1, d'une condition de sélection initiale portant sur un attribut tatoué, cette condition est modifiée en tenant compte de la force de marquage de l'attribut tatoué, comme décrit ci-après. La prise en compte de cette force de marquage pour transformer la condition de sélection initiale permet avantageusement de prévenir les erreurs de sélection des tuples.

De manière générale, en présence dans la première requête d'extraction R1, d'une fonction d'agrégation portant sur un attribut tatoué, cette fonction est incluse ultérieurement dans une troisième requête R3 décrite ci-après. Le fait d'exclure cette fonction de la deuxième requête d'extraction R2 évite des erreurs de sélection de tuples, étant donné que la valeur des attributs tatoués a été modifiée selon la force de marquage. Par exemple, le résultat d'une somme calculée sur des valeurs tatouées ne sera pas forcément correct en raison de la force de marquage. Ainsi, on évite de calculer des agrégats portant sur des données tatouées.

Dans tous les cas, les modifications des valeurs des attributs tatoués selon le mécanisme de tatouage considéré sont prises en compte pour l'obtention de la deuxième requête d'extraction R2.

Dans les présents exemples, le module de ré-écriture 22 détermine, d'après les métadonnées que l'attribut *Duree_sejour* sur lequel porte la condition de sélection initiale est un attribut tatoué. Par souci de simplification, une seule condition de sélection a été considérée, mais bien évidemment le même traitement s'appliquerait à chacune des conditions dans le cas où plusieurs conditions de sélection portant sur des attributs tatoués seraient comprises dans la première requête d'extraction R1.

De manière générale, en fonction de la forme de la condition de sélection initiale portant sur l'attribut tatoué *Duree_sejour* telle qu'identifiée, la condition de sélection est transformée par le module de ré-écriture 22, selon l'un des cas suivants :
- si la condition initiale est de type A > S, celle-ci est transformée en A > S - α ;
- si la condition initiale est de type A ≥ S, celle-ci est transformée en A ≥ S - α ;
- si la condition initiale est de type A < S, celle-ci est transformée en A < S + α ;
- si la condition initiale est de type A ≤ S, celle-ci est transformée en A ≤ S + α ;
- si la condition initiale est de type S1≤A≤S2 (i.e. A BETWEEN S1 AND S2), celle-ci est transformée en A≥S1-α AND A≤S2+α, où AND désigne l'opérateur « et » ;
- si la condition initiale est de type A=S, celle-ci est transformée en A = S + α OR A = S ― α ; où OR désigne l'opérateur « ou »
- si la condition initiale est de type A !=S, celle-ci est transformée en A ! = S + α OR A != S ― α.

Dans l'exemple 1, étant donné que la condition de sélection initiale *Duree_sejour* = 10 est de type A = S où S est un seuil fixé à 10, la condition est transformée par le module de ré-écriture 22 en une condition A=S-α ou A=S+α est incluse dans la deuxième requête d'extraction R21 dont l'expression est la suivante :
**R21** : SELECT ^{∗} FROM *Table* WHERE ***Durée_séjour* = 8 OR *Durée_séjour* = 12**

Dans l'exemple 2, étant donné que la condition de sélection initiale *Durée_séjour* > 10 est de type A>S, celle-ci est transformée en A>S-α où α = 2, i.e. *Durée*_*séjour* > 8, pour l'obtention de la deuxième requête d'extraction R22 dont l'expression est la suivante :
**R22** : SELECT *Id_sejour* FROM *Table* WHERE ***Duree_sejour* > 8**

La clé primaire *Id_sejour* a été désignée comme attribut de sélection de la deuxième requête d'extraction R22.

Dans l'exemple 3, étant donné que la condition de sélection initiale *Duree_sejour* < 10 est de type A<S, celle-ci est transformée en A<S+α où α=2, pour l'obtention de la deuxième requête d'extraction R23, dans laquelle la condition initiale transformée *Duree_sejour* < 12 est incluse. Dans cet exemple, la deuxième requête d'extraction R23 est formulée comme suit :
**R23 :** SELECT *Id_sejour, Age, Duree_sejour* FROM *Table* WHERE *Sexe*='Male' AND ***Duree_sejour* < 12**

Ainsi, pour satisfaire la première requête d'extraction R13 émise par l'utilisateur, la condition initiale a été adaptée en fonction du tatouage de l'attribut *Duree_sejour*, dont les valeurs ont été modifiées de ±2 par le tatouage.

Etant donné que la condition de sélection initiale *Sexe*='Male' porte sur un attribut non tatoué, celle-ci est insérée, sans aucune modification, dans la deuxième requête d'extraction R23.

Selon une particularité de l'invention, l'attribut *Age* sur lequel porte la fonction d'agrégation *Max()* et l'attribut *Duree_sejour* sur lequel porte la condition de sélection initiale sont désignés en tant qu'attributs de sélection dans la deuxième requête de sélection R2 dans le corps de la commande SELECT.

La clé primaire *Id_sejour* a été désignée comme attribut de sélection de la deuxième requête d'extraction R23.

De manière générale, dès lors que la deuxième requête d'extraction R2 est obtenue ou générée par le module de ré-écriture 22, le serveur 2 extrait, lors d'une étape d'extraction E5, des données tatouées de la base de données 3, dites données extraites tatouées E, en réponse à l'application de la deuxième requête d'extraction R2.

De manière générale, ces données extraites tatouées E sont constituées par un deuxième ensemble de tuples comprenant les attributs du premier ensemble de tuples, et notamment les attributs de sélection tels que désignés dans la deuxième requête d'extraction R2, en tenant compte des conditions de sélection et des éventuelles fonctions d'agrégation.

Pour l'extraction, le serveur 2 met en oeuvre un module de gestion de la base de données 26 qui obtient auprès de la base de données 3, les données extraites tatouées E.

Par exemple, ce module de gestion est un module logiciel supportant le modèle relationnel capable de manipuler les données avec des opérateurs relationnels. Ainsi, le module de gestion 26 applique respectivement les deuxièmes requêtes d'extraction R21, R22 et R23 à la base de données 3 respectivement dans les premier, deuxième et troisième exemples.

Les données extraites tatouées E obtenues à l'issue de l'étape d'extraction E5 sont fournies à un module de traitement 28 du serveur 2 qui réalise le détatouage de ces données, lors d'une étape de détatouage E7 de manière à fournir des données extraites détatouées E'.

Par exemple, le détatouage des données est réalisé par un sous-module de détatouage 28.1 mis en oeuvre sous forme logicielle au sein d'un module de traitement 28 du serveur 2. Pour effectuer le détatouage, certaines métadonnées de tatouage M sont utilisées, telles que la force de marquage ±2 associée à l'attribut *Duree_sejour*, la force de marquage ±3 associée à l'attribut *Age* et la clé primaire *Id_sejour.*

De manière générale, une troisième requête R3 est obtenue par le serveur 2, lors d'une étape d'obtention E9, pour sélectionner parmi les données extraites détatouées E', les tuples qui répondent aux conditions de sélection initiales préalablement identifiées par le serveur 2 dans la première requête d'extraction R1, ces conditions portant sur des attributs initialement tatoués.

Dans le cas où la première requête d'extraction R1 contient des fonctions d'agrégation portant sur des attributs initialement tatoués, le serveur 2 introduit ces fonctions dans la troisième requête R3.

La troisième requête R3 est générée, par exemple, par un sous-module 28.3 du module de traitement 28 du serveur 2, en y incluant les conditions de sélection initiales et le cas échéant les fonctions d'agrégation portant sur des attributs tatoués, ces conditions et fonctions ayant été préalablement identifiées par le serveur (module de ré-écriture 22) dans la première requête d'extraction R1.

Dans l'exemple 1, la troisième requête R31 a pour objet de sélectionner, parmi les données extraites détatouées E', l'ensemble des tuples pour lesquels la durée de séjour est égale à 10 jours, en appliquant la condition de sélection initiale ***Durée_séjour* = 10** telle que spécifiée dans la première requête d'extraction R31. La troisième requête R13 est exprimée comme suit :
**R31 :** SELECT ^{∗} FROM E' WHERE ***Durée_séjour* = 10**

Dans l'exemple 2, la troisième requête R32 a pour objet de sélectionner les identifiants de séjour, parmi les données extraites détatouées E' et pour lesquels la durée de séjour est supérieure 10 jours, en appliquant la condition de sélection initiale ***Durée_séjour* > 10** telle que spécifiée dans la première requête d'extraction R12. La troisième requête R32 est exprimée comme suit :
**R32** : SELECT *Id_Séjour* FROM E' WHERE ***Durée_séjour* > 10**

Dans l'exemple 3, la troisième requête R33 a pour objet de déterminer l'âge maximum des patients en calculant la fonction *Max(Age),* à partir des données extraites détatoués E' et pour lesquelles la durée de séjour est inférieure à 10 jours, en appliquant la condition de sélection initiale ***Durée_séjour* < 10**, telle que spécifiée dans la première requête d'extraction R13. La troisième requête R33 est exprimée comme suit :
**R33** : SELECT *Max(Age)* FROM *E*' WHERE ***Durée_séjour* < 10**

De manière générale, lors d'une étape de filtrage ou transformation E11, la troisième requête R3 est appliquée par le serveur 2 (sous-module 28.5 du module de traitement 28 du serveur 2) aux données extraites détatouées E', de manière à fournir un résultat R destiné à être envoyé au client 1, lors d'une étape d'envoi E15, en réponse à la première requête d'extraction R1. Cette étape d'envoi E15 peut être mise en oeuvre, par exemple, par un sous-module d'émission 28.9 du module de traitement 28 du serveur 2.

En exécutant la troisième requête, la condition de sélection initiale telle que spécifiée dans la première requête d'extraction dans les exemples 1 et 2) et la fonction d'agrégation *Max(Age)* portant sur l'attribut tatoué *Age* dans l'exemple 3 sont respectivement appliquée et calculée sur des données non tatouées, permet de fournir à l'utilisateur un résultat fiable en réponse à la première requête d'extraction, en évitant les erreurs de sélection ou d'agrégation portant sur des attributs tatoués.

Etant donné que le résultat R est constitué par des données détatouées, une étape de tatouage E13 optionnelle peut être prévue avant l'étape d'envoi E15 pour des raisons de sécurité, de manière à dissuader l'utilisateur de diffuser des données extraites et/ou d'altérer le contenu de ces données. A cet effet, le serveur 2 peut utiliser le mécanisme de tatouage réversible tel que défini par les métadonnées de tatouage M ou bien tout autre type de tatouage.

En particulier, l'étape de tatouage E13 comprend l'insertion d'au moins un identifiant de l'utilisateur ayant émis la première requête d'extraction R1 permettant d'identifier de manière certaine l'utilisateur ayant émis la première requête d'extraction.

A titre d'exemple illustratif, l'identifiant de l'utilisateur peut être constitué par l'identité de la personne codée sous forme de séquence binaire, telle que le numéro de carte de professionnel de santé du médecin. On pourra également considérer des codes anti-collusion, i.e. codes construits de manière particulière afin d'identifier des utilisateurs malhonnêtes qui ont accès à une même base de données et qui collaborent afin de produire une copie non tatouée de cette base.

L'étape de tatouage E13 peut également comprendre l'insertion d'au moins une signature permettant de vérifier *a posteriori* que les données extraites n'ont pas été falsifiées.

A titre d'exemple illustratif, on pourra considérer l'insertion d'une information permettant de contrôler que l'utilisation d'un jeu de données ne dépasse pas une certaine durée fixée au préalable.

L'étape de tatouage E13 peut être mise en oeuvre en particulier par un sous-module de tatouage 28.7 du module de traitement 28 sur le serveur 2.

On notera que ledit au moins un identifiant et ladite au moins une signature pourront être insérés conjointement lors de l'étape de tatouage E13.

Ainsi, l'invention permettra d'identifier le coupable d'une attaque cybercriminelle telle que le vol, la fuite ou le détournement d'informations sensibles ou confidentielles et de protéger l'intégrité des informations extraites de la base de données, ainsi que la traçabilité de ces données. De manière connue, la première requête d'extraction R1 peut inclure au moins une sous-requête SR destinée à sélectionner un sous-ensemble de tuples de la table *Table*, sur lesquels la première requête d'extraction R1 opère une sélection ou un filtrage avec l'application éventuelle d'une ou plusieurs fonctions d'agrégation. Dans ce cas, la première requête d'extraction R1 peut être décrite de manière générale, sous la forme suivante :
R1 : SELECT *Attributs, Fonction(s) d'agrégation* FROM **SR**
avec **SR** : SELECT *Attributs, Fonction d'agrégation* FROM *Table* WHERE *Conditions de sélection, Fonction(s) d'agrégation.*

Bien entendu, l'invention pourra également être appliquée à la sous-requête SR, tel que décrit précédemment.

Selon un quatrième exemple plus complexe donné à titre illustratif, on traite le cas où la première requête d'extraction R1 comprend une sous-requête SR qui vise à sélectionner un ensemble de tuples parmi la relation *Table.* On considère relation *Table* contient un attribut supplémentaire *diagnostic_principal* indiquant la nature du diagnostic principal médical opéré sur le patient, cet attribut étant tatoué. On suppose que l'utilisateur veut obtenir la valeur maximale des valeurs moyennes des durées de séjour regroupées par diagnostic et le diagnostic pour lequel cette valeur maximale apparaît.

Dans ce cas, la première requête d'extraction R14 est formulée en langage SQL comme suit :
**R14**: SELECT *s1.diagnostic_principal, Max*(s1.a) FROM (SELECT *diagnostic_principal*, AVG(*Age*) AS a FROM *Table* GROUP BY *diagnostic_principal*) s1;
Cette requête comprend la sous-requête RS : SELECT *diagnostic*_*principal*, AVG(Age) AS *a* FROM *Table* GROUP BY *diagnostic_principal.*

Etant donné que la sous-requête RS comprend la fonction d'agrégation AVG pour le calcul de la valeur moyenne portant sur l'attribut tatoué *Age,* cette fonction n'est pas incluse dans la deuxième requête d'extraction R24 mais dans la troisième requête R34 selon l'invention.

Ainsi, la deuxième requête d'extraction R24 est formulée comme suit :
**R24** : SELECT *id_sejour, diagnostic_principal, Age* FROM *Table*

La troisième requête R34 est formulée comme suit :
**R34** : SELECT *s1.diagnostic_principal, MAX*(s1.a) FROM *E'* s1

Cette dernière requête n'est pas exécutée sur les données tatouées dans la base de données, mais sur une table intermédiaire comprenant les données extraites détatouées *E'* et stockée dans une mémoire RAM du serveur 2.

De manière générale, la première requête d'extraction R1 et/ou ladite au moins une sous-requête SR incluse dans la première requête d'extraction peuvent comprendre tout type d'opérations portant sur une ou plusieurs tables, telle qu'une jointure de plusieurs tables.

Selon un cinquième exemple plus complexe, on traite le cas où la première requête d'extraction R1 comprend plusieurs sous-requêtes et une opération de jointure de deux tables.

Pour cela, on considère une deuxième *Table2* qui contient des informations relatives aux médecins tels que l'identifiant du service *Id* et le nom du service *nom*, *service.* On suppose que la précédente table *Table* comprend l'identifiant du médecin *Id_medecin* comme attribut supplémentaire.

L'utilisateur veut récupérer l'âge des patients et le service dans lequel ils ont séjourné, uniquement pour des patients d'âge supérieur à 18 et pour les services dont le nom commence par la lettre « N » (e.g. Néphrologie, Neurologie).

Par exemple, la première requête d'extraction R15 est formulée comme suit :
**R15** : SELECT *s.Age*, m.*service* FROM (SELECT *id, service* FROM *Table2*) *m* **INNER JOIN** (SELECT *Age*, *id_medecin* FROM *Table* WHERE *Age* > 18) *s* ON m.id = *s.id_medecin* WHERE *m.service* LIKE "N%",
où l'opérateur INNER JOIN opère la jointure des deux tables désignés par « m » et « s » relatives aux médecins et aux patients respectivement.

Lors de l'analyse de la première requête d'extraction R15, deux sous-requêtes R150 et R151 sont identifiées :
**R150 :** SELECT *id, service* FROM *Table2*
**R151** : SELECT *Age, id_medecin* FROM *Table* WHERE *Age* > 18

Ces sous-requêtes jouent le rôle de tables sur lesquelles l'opération de jointure est appliquée. La sélection de l'attribut *Age* et *Service* dans ces tables est incluse dans la troisième requête R35 par *s.age* et *m.service* respectivement lors de l'étape d'obtention E9.

En supposant que la table *Table2* ne contient pas d'attributs tatoués, la première sous-requête R150 peut être exécutée sans modification, tandis que la deuxième sous-requête R151 portant sur *Table* comprenant l'attribut tatoué *Age* doit être modifiée. La condition *Age* > *18* est transformée en *Age* > *15*, étant donné que la force de marquage de l'attribut *Age* est égale à ±3. La clé primaire de la table est utilisée pour dé-tatouer.

Les deuxièmes requêtes d'extraction obtenues lors de l'étape E3 sont :
**R250 :** SELECT *id, service* FROM *Table2*
**R251 :** SELECT *id_sejour, age, id_medecin* FROM *Table* WHERE *Age* > *15*

Les deuxièmes requêtes R250 et R251 permettent de récupérer deux tables de résultats désignées par *m* et s respectivement, lors de l'étape d'extraction E5.

Lors de l'étape de détatouage E7, la marque est supprimée de la table de résultats s. Les résultats dé-tatoués peuvent alors être filtrés en utilisant la condition *Age* > 18 telle que présente dans la première requête d'extraction R1.

La troisième requête R35 à appliquer sur les résultats en mémoire est de la forme suivante :
**R35 :** SELECT *s.age, m.service* FROM *m* INNER JOIN *s* ON m.id = s.id_medecin WHERE m.service LIKE "N%";
Selon d'autres exemples de mise en oeuvre, ladite au moins une condition de sélection initiale contenue dans la première requête d'extraction R1 par rapport audit au moins un seuil S est transformée en fonction de la force de marquage α selon l'un quelconque des cas suivants
   - si ladite condition initiale est de type A ≥ S, celle-ci est transformée en A ≥ S - α ;
   - si ladite condition initiale est de type A ≤ S, celle-ci est transformée en A ≤ S + α ;
   - si ladite condition initiale est de type « A BETWEEN S1 AND S2 », celle-ci est transformée en « A≥S1- α OR A<S2+ α » ou en « A>S1- α OR A<S2+ α », AND désignant l'opérateur « et », S1 et S2 désignant deux seuils numériques ;
   - si ladite condition initiale est de type A !=S, celle-ci est transformée en A != S + α OR A != S - α, où « OR » désigne l'opérateur « ou »

Naturellement, pour satisfaire des besoins spécifiques, une personne compétente dans le domaine de l'invention pourra appliquer des modifications dans la description précédente.

Les exemples précédents ont été décrits pour des attributs de type numérique. Toutefois, la présente invention s'applique également à d'autres types d'attributs tels que de type catégoriel. Un exemple de modification de requête sur un attribut catégoriel va être maintenant décrit. A titre d'exemple illustratif, on considère l'attribut désignant la couleur des yeux d'un patient. Cet attribut catégoriel peut prendre les valeurs suivantes : bleu, vert, marron, gris, noir.

On suppose que l'opération de tatouage revient à une modification des valeurs de l'attribut catégoriel de la manière suivante : bleu→vert→marron→gris→noir pour coder un bit « 0 » et bleu←vert←marron←gris←noir pour coder un bit « 1 ». Cette règle de modification est enregistrée dans les métadonnées de tatouage.

Dans cet exemple, on suppose que l'utilisateur souhaite obtenir la liste de tous les patients avec une couleur des yeux commençant par la lettre m. La première requête d'extraction R16 est formulée dans le langage SQL, selon l'exemple suivant :
**R16** : SELECT ^{∗} FROM *Table* WHERE ***couleur_yeux*** LIKE 'm%'

Selon le principe de l'invention, la valeur m% de l'attribut catégoriel dans la condition LIKE 'm%' doit être modifiée car la valeur de l'attribut *couleur_yeux* a été modifiée lors du tatouage.

D'après la règle de tatouage, la valeur *marron* qui est la seule à commencer par la lettre m a été remplacée soit par *gris* soit par *vert.* Par conséquent, la condition de sélection initiale est transformée en l'union de deux conditions de sélection de sorte que la deuxième requête d'extraction R26 s'exprime comme suit :
**R26:** SELECT ^{∗} FROM Table WHERE couleur_yeux LIKE 'g%' OR couleur_yeux LIKE 'v%'

Ainsi la condition de sélection initiale a été transformée en au moins deux sous-conditions effectuant la sélection de tuples par rapport à deux valeurs catégorielles déterminées g% et v% en fonction de la règle de tatouage prédéfinie dans les métadonnées de tatouage.

Comme décrits dans les précédents exemples, dès lors de que les résultats sont extraits de la base de données en réponse à cette deuxième requête d'extraction R26, les résultats sont détatoués et filtrés selon la première requête d'extraction R16 afin d'obtenir le résultat final souhaité.

Bien que la présente invention ait été décrite ci-dessus en référence à un mode de réalisation spécifique, la présente invention n'est pas limitée à ce seul mode de réalisation spécifique, et les modifications qui se trouvent dans le champ d'application de la présente invention seront évidentes pour une personne versée dans l'art.

Les exemples décrits ci-avant ne sont pas limitatifs, on comprendra que tout autre type de requêtes pourra être considéré, en tenant compte des applications et du langage considérés. Par exemple, il n'est pas nécessaire que les requêtes contiennent une ou plusieurs fonctions d'agrégation. D'autres types de requêtes d'extraction pourront contenir un ou plusieurs attributs de sélection pris parmi des attributs tatoués ou non tatoués, avec une ou plusieurs conditions de sélection et/ou un ou plusieurs fonctions d'agrégation portant sur un ou plusieurs attributs tatoués ou non tatoués. Par conséquent, le serveur pourra être adapté pour mettre en oeuvre le procédé selon l'invention en fonction du contenu de la requête en tenant compte des spécificités du langage utilisé.

## Revendications

1. Procédé d'extraction de données par un serveur (2) dans une base de données tatouées (3) selon un mécanisme de tatouage réversible défini par des métadonnées de tatouage (M) de manière à dissimuler une marque dans les données, ladite base de données comportant des tuples comprenant au moins un attribut tatoué (Aₙ), ledit procédé comprenant :
• une étape de réception (E1) d'une première requête d'extraction (R1 ; R11 ; R12 ; R13 ; R14 ; R15) d'un terminal client (1) pour sélectionner un premier ensemble de tuples dans ladite base de données (3), selon au moins une condition de sélection initiale portant sur la valeur (A) dudit au moins un attribut tatoué (Aₙ) par rapport à au moins un seuil S;
• une étape d'obtention (E3), à partir de ladite première requête d'extraction, d'une deuxième requête d'extraction (R2 ; R21 ; R22 ; R23 ; R24 ; R25) pour sélectionner un deuxième ensemble de tuples comprenant les attributs du premier ensemble de tuples incluant ledit au moins un attribut tatoué sur lequel porte ladite au moins une condition de sélection, ladite deuxième requête d'extraction comprenant au moins une condition de sélection obtenue par transformation, à partir des métadonnées de tatouage (M), de ladite au moins une condition de sélection initiale portant sur au moins un attribut tatoué A ;
• une étape d'extraction (E5), lors de laquelle les tuples dudit deuxième ensemble (E) sont extraits de ladite base de données (3) selon la deuxième requête d'extraction;
• une étape de détatouage (E7), lors de laquelle les tuples dudit deuxième ensemble de tuples extraits (E) sont détatoués (E') selon les métadonnées de tatouage (M);
• une étape d'obtention (E9), à partir de la première requête d'extraction (R1), d'une troisième requête (R3 ; R31 ; R32 ; R33 ; R34 ; R35) pour sélectionner un troisième ensemble de tuples parmi ledit deuxième ensemble de tuples détatoués (E'), ladite troisième requête comprenant ladite au moins une condition de sélection initiale ;
• une étape de filtrage ou transformation (E11), lors de laquelle la troisième requête est appliquée au deuxième ensemble de tuples détatoués (E') ; et
• une étape d'envoi (E15) au client des résultats (R) issus de l'étape de filtrage ou transformation (E11).

2. Procédé selon la revendication 1, **caractérisé en ce que** lesdites données ont été préalablement tatouées lors de leur insertion dans la base de données en modifiant la valeur dudit au moins un attribut tatoué selon une force de marquage α non nulle, **en ce que** ledit au moins un attribut tatoué A est de type numérique et **en ce que** ladite au moins une condition de sélection initiale par rapport audit au moins un seuil S est transformée en fonction de ladite force de marquage α renseignée dans les métadonnées de tatouage, selon l'un quelconque des cas suivant :
• si ladite condition initiale est de type A > S ou A ≥ S, celle-ci est transformée en A > S - α ou A ≥ S - α respectivement ;
• si ladite condition initiale est de type A < S ou A ≤ S, celle-ci est transformée en A < S + α ou A ≤ S + α respectivement;
• si ladite condition initiale est de type S1≤A≤S2, celle-ci est transformée en A≥S1-α et A≤S2+α ;
• si ladite condition initiale est de type S1<A<S2, celle-ci est transformée en A>S1-α et A<S2+α ;
• si ladite condition initiale est de type A=S, celle-ci est transformée en A = S + α ou A = S ― α.

3. Procédé selon la revendication 1, **caractérisé en ce que** ledit au moins un attribut tatoué A est de type catégoriel et **en ce que** ladite au moins une condition de sélection initiale est transformée en au moins deux sous-conditions effectuant la sélection de tuples par rapport à des valeurs catégorielles déterminées en fonction d'une règle de tatouage prédéfinie dans les métadonnées de tatouage.

4. Procédé selon la revendication 1, **caractérisé en ce que** la deuxième requête d'extraction (R2 ; R23) comprend au moins une condition de sélection portant sur un attribut non tatoué présente dans la première requête d'extraction (R1 ; R13).

5. Procédé selon l'une quelconque des revendications précédentes, **caractérisé en ce que** la deuxième requête d'extraction (R2) comprend au moins une fonction d'agrégation portant sur un attribut non tatoué présente dans la première requête d'extraction (R1).

6. Procédé selon l'une quelconque des revendications précédentes, **caractérisé en ce qu'**en présence, dans ladite première requête d'extraction (R1 ; R13 ; R14), d'au moins une fonction d'agrégation portant sur un attribut tatoué, ladite au moins une fonction d'agrégation est exclue de ladite deuxième requête d'extraction (R2 ; R23 ; R24) mais incluse dans la troisième requête (R3 ; R33 ; R34) et l'attribut tatoué sur lequel porte ladite au moins une fonction d'agrégation est inséré dans la deuxième requête d'extraction (R2) en tant qu'attribut de sélection.

7. Procédé selon l'une quelconque des revendications précédentes, **caractérisé en ce qu'**il comprend en outre une étape de tatouage (E13), lors de laquelle les données extraites détatouées (E) issues de l'étape de filtrage ou transformation (E11) sont tatouées (E') avant l'étape d'envoi (E15).

8. Procédé selon la revendication précédente, **caractérisé en ce que** le tatouage des données comprend l'insertion, dans les données extraites détatouées (E), d'au moins un identifiant d'un utilisateur ayant émis la première requête d'extraction (R1 ; R12 ; R12 ; R13 ; R14 ; R15) et/ou d'au moins une signature et/ou d'informations de traçabilité.

9. Programme d'ordinateur comprenant les instructions adaptées à la mise en oeuvre des étapes du procédé selon l'une quelconque des revendications précédentes, lorsque ledit programme est exécuté sur un ordinateur.

10. Moyen de stockage d'informations, amovible ou non, partiellement ou totalement lisible par un ordinateur ou un microprocesseur comportant les instructions de code d'un programme d'ordinateur pour l'exécution des étapes du procédé selon l'une quelconque des revendications 1 à 8.

11. Serveur (2) adapté pour exécuter les instructions adaptées à la mise en oeuvre des étapes du procédé selon l'une quelconque des revendications 1 à 8.

## Patentansprüche

1. Verfahren zum Abrufen von Daten durch einen Server (2) aus einer Datenbank (3), die gemäß einem reversiblen Mechanismus der Wasserzeichenmarkierung, der durch Wasserzeichenmarkierungs-Metadaten (M) definiert ist, um eine Markierung in den Daten zu verbergen, mit Wasserzeichen markiert ist, wobei die Datenbank Tupel umfasst, die mindestens ein wasserzeichenmarkiertes Attribut (Aₙ) umfassen, wobei das Verfahren Folgendes umfasst:
• einen Schritt des Empfangs (E1) einer ersten Abrufanforderung (R1; R11; R12; R13; R14; R15) eines Client-Terminals (1) zur Auswahl eines ersten Satzes Tupel in der Datenbank (3) gemäß mindestens einer anfänglichen Auswahlbedingung, die sich auf den Wert (A) des mindestens einen wassermarkierten Attributs (Aₙ) in Bezug auf mindestens einen Schwellenwert S bezieht;
• einen Schritt des Erhalts (E3) einer zweiten Abrufanforderung (R2; R21; R22; R23; R24; R25) ausgehend von der ersten Abrufanforderung zur Auswahl eines zweiten Satzes Tupel, umfassend die Attribute des ersten Satzes Tupel, einschließlich des mindestens einen wasserzeichenmarkierten Attributs, auf das sich die mindestens eine Auswahlbedingung bezieht, wobei die zweite Abrufanforderung mindestens eine Auswahlbedingung umfasst, die durch Umwandlung der mindestens einen anfänglichen Auswahlbedingung aus den Wasserzeichenmarkierungs-Metadaten (M) erhalten wird, die sich auf mindestens ein wasserzeichenmarkiertes Attribut A bezieht;
• einen Schritt des Abrufs (E5), bei dem die Tupel des zweiten Satzes (E) gemäß der zweiten Abrufanforderung aus der Datenbank (3) abgerufen werden;
• einen Schritt der Entfernung der Wasserzeichenmarkierung (E7), bei dem die Wasserzeichen der Tupel des zweiten Satzes abgerufener Tupel (E) gemäß den Wasserzeichenmarkierungs-Metadaten (M) entfernt (E') werden;
• einen Schritt des Erhalts (E9) einer dritten Abrufanforderung (R3; R31; R32; R33; R34; R35) ausgehend von der ersten Abrufanforderung (R1) zur Auswahl eines dritten Satzes Tupel unter dem zweiten Satz Tupel mit entfernten Wasserzeichen (E'), wobei die dritte Abrufanforderung die mindestens eine anfängliche Auswahlbedingung umfasst;
• einen Schritt der Filterung oder Umwandlung (E11), bei dem die dritte Abrufanforderung auf den zweiten Satz Tupel mit entfernten Wasserzeichen (E') angewendet wird; und
• einen Schritt des Versands (E15) der Ergebnisse (R) des Schrittes der Filterung oder Umwandlung (E11) an den Client.

2. Verfahren nach Anspruch 1, **dadurch gekennzeichnet, dass** die Daten vorab bei ihrer Einstellung in die Datenbank mit Wasserzeichen markiert wurden, indem der Wert des mindestens einen wasserzeichenmarkierten Attributs gemäß einer Markierungsstärke α ungleich Null verändert wurde, dass das mindestens eine wassermarkierte Attribut A numerischer Art ist und dass die mindestens eine anfängliche Auswahlbedingung in Bezug auf den mindestens einen Schwellenwert S abhängig von der Markierungskraft α, die in den Wasserzeichenmarkierungs-Metadaten angegeben ist, gemäß einem der folgenden Fälle umgewandelt wird:
• Ist die anfängliche Bedingung vom Typ A > S oder A ≥ S, wird diese umgewandelt zu A > S-α bzw. A ≥ S-α.
• Ist die anfängliche Bedingung vom Typ A < S oder A ≤ S, wird diese umgewandelt zu A < S+α bzw. A ≤ S+α.
• Ist die anfängliche Bedingung vom Typ S1 ≤ A ≤ S2, wird diese umgewandelt zu A ≥ S1-α und A ≤ S2+α.
• Ist die anfängliche Bedingung vom Typ S1 < A < S2, wird diese umgewandelt zu A > S1-α und A < S2+α.
• Ist die anfängliche Bedingung vom Typ A=S, wird diese umgewandelt zu A=S+α oder A=S-α.

3. Verfahren nach Anspruch 1, **dadurch gekennzeichnet, dass** das die mindestens eine wasserzeichenmarkierte Attribut A vom kategorialen Typ ist und dass die mindestens eine anfängliche Auswahlbedingung zu mindestens zwei Unterbedingungen umgewandelt wird, die die Auswahl der Tupel in Bezug auf abhängig von einer in den Wasserzeichenmarkierungs-Metadaten vordefinierten Regel der Markierung mit Wasserzeichen festgelegte kategoriale Werte vornehmen.

4. Verfahren nach Anspruch 1, **dadurch gekennzeichnet, dass** die zweite Abrufanforderung (R2; R23) mindestens eine Auswahlbedingung umfasst, die sich auf ein nicht wasserzeichenmarkiertes Attribut bezieht, das in der ersten Abrufanforderung (R1; R13) vorhanden ist.

5. Verfahren nach einem der vorstehenden Ansprüche, **dadurch gekennzeichnet, dass** die zweite Abrufanforderung (R2) mindestens eine Aggregationsfunktion umfasst, die sich auf ein nicht wasserzeichenmarkiertes Attribut bezieht, dass in der ersten Abrufanforderung (R1) vorhanden ist.

6. Verfahren nach einem der vorstehenden Ansprüche, **dadurch gekennzeichnet, dass** bei Vorhandensein, in der ersten Abrufanforderung (R1; R13; R14), der mindestens einen Aggregationsfunktion, die sich auf ein wasserzeichenmarkiertes Attribut bezieht, die mindestens eine Aggregationsfunktion von dieser zweiten Abrufanforderung (R2; R23; R24) ausgeschlossen, jedoch in der dritten Abrufanforderung (R3; R33; R34) eingeschlossen ist und dass das wasserzeichenmarkierte Attribut, auf das sich diese mindestens eine Aggregationsfunktion bezieht, in die zweite Abrufanforderung (R2) als Auswahlattribut aufgenommen wird.

7. Verfahren nach einem der vorstehenden Ansprüche, **dadurch gekennzeichnet, dass** es weiter einen Schritt der Wasserzeichenmarkierung (E13) umfasst, bei dem die abgerufenen Daten mit entfernten Wasserzeichen (E), die aus dem Schritt der Filterung oder Umwandlung (E11) hervorgegangen sind, vor dem Schritt des Versands (E15) mit Wasserzeichen markiert (E') werden.

8. Verfahren nach dem vorstehenden Anspruch, **dadurch gekennzeichnet, dass** die Wasserzeichenmarkierung der Daten das Einfügen mindestens einer Kennung eines Benutzers, der die erste Abrufanforderung (R1; R12; R12; R13; R14; R15) erstellt hat, und/oder mindestens einer Unterschrift und/oder von Rückverfolgbarkeitsdaten in die abgerufenen Daten mit entfernten Wasserzeichen (E) umfasst.

9. Computerprogramm, umfassend die Anweisungen, die geeignet sind, die Schritte des Verfahrens nach einem der vorstehenden Ansprüche umzusetzen, wenn das Programm auf einem Computer ausgeführt wird.

10. Informationsspeichermittel, fest verbaut oder nicht, teilweise oder vollständig von einem Computer oder einem Mikroprozessor lesbar, umfassend die Codeanweisungen eines Computerprogramms für die Ausführung der Schritte des Verfahrens nach einem der Ansprüche 1 bis 8.

11. Server (2) der geeignet ist, die Anweisungen auszuführen, die für die Umsetzung der Schritte des Verfahrens nach einem der Ansprüche 1 bis 8 geeignet sind.

## Claims

1. Method for extraction of data by a server (2) in a database (3) of data that is watermarked according to a reversible watermarking mechanism defined by watermarking metadata (M) so as to a dissimulate a mark, said database comprising tuples comprising at least one watermarked attribute (Aₙ), said method comprising:
• a step (E1) of receiving a first extraction request (R1; R11; R12; R13; R14; R15) from a client terminal (1) to select a first set of tuples from said database (3), according to at least one initial selection condition relating to the value (A) of said at least one watermarked attribute (Aₙ) with respect to at least one threshold S;
• a step (E3) of obtaining, from said first extraction request, a second extraction request (R2; R21; R22; R23; R24; R25) to select a second set of tuples comprising the attributes of the first set of tuples including said at least one watermarked attribute to which said at least one selection condition relates, said second extraction request comprising at least one selection condition obtained by transforming said at least one initial selection condition relating to at least one watermarked attribute A;
• an extraction step (E5), during which the tuples of said second set (E) are extracted from said database (3) according to the second extraction request;
• a de-watermarking step (E7), during which the tuples of said second set of extracted tuples (E) are de-watermarked (E') according to the watermarking metadata (M);
• a step (E9) of obtaining, from the first extraction request (R1), a third request (R3; R31; R32; R33; R34; R35) to select a third set of tuples from said second set of de-watermarked tuples (E'), said third request comprising said at least one initial selection condition;
• a filtering or transformation step (E11), during which the third request is applied to the second set of de-watermarked tuples (E'); and
• a step (E15) of sending results (R) from the filtering or transformation step (E11) to the client.

2. Method according to claim 1, **characterised in that** said data are beforehand watermarked during their insertion into the database by modifying the value of said at least one watermarked attribute according to a non-zero watermarking strength α, **in that** said at least one watermarked attribute A is numerical, and **in that** said at least one initial selection condition with respect to said at least one threshold S is transformed as a function of said watermarking strength α stipulated in the watermarking metadata according to any one of the following cases:
▪ if said initial condition is of the type A > S or A ≥ S, it is transformed into A> S ― α or A ≥ S ― α respectively;
▪ if said initial condition is of the type A < S or A ≤ S, it is transformed into A < S + α or A ≤ S + α respectively;
▪ if said initial condition is of the type S1 ≤ A ≤ S2, it is transformed into A ≥ S1 ― α and A ≤ S2 + α;
▪ if said initial condition is of the type S1 < A < S2, it is transformed into A > S1 ― α and A < S2 + α;
▪ if said initial condition is of the type A = S, it is transformed into A = S + α or A = S ― α.

3. Method according to claim 1, **characterised in that** said at least one watermarked attribute A is of categorical type and **in that** said at least one initial selection condition is transformed into at least two sub-conditions that bring about the selection of tuples with respect to categorical values determined as a function of a watermarking rule predefined in the watermarking metadata.

4. Method according to claim 1, **characterised in that** the second extraction request (R2; R23) comprises at least one selection condition, relating to a non-watermarked attribute, that is present in the first extraction request (R1; R13).

5. Method according to any one of the preceding claims, **characterised in that** the second extraction request (R2) comprises at least one aggregation function, relating to a non-watermarked attribute, that is present in the first extraction request (R1).

6. Method according to any one of the preceding claims, **characterised in that** in the presence, in said first extraction request (R1; R13; R14), of at least one aggregation function relating to a watermarked attribute, said at least one aggregation function is excluded from said second extraction request (R2; R23; R24) but included in the third request (R3; R33; R34), and the watermarked attribute to which said at least one watermarked aggregation function relates is inserted into the second extraction request (R2) as a selection attribute.

7. Method according to any one of the preceding claims, **characterised in that** it further comprises a watermarking step (E13), during which the extracted de-watermarked data (E) from the filtering or transformation step (E11) are watermarked (E') before the sending step (E15).

8. Method according to the preceding claim, **characterised in that** watermarking the data comprises inserting into the extracted de-watermarked data (E) at least one identifier of a user who made the first extraction request (R1; R12; R12; R13; R14; R15) and/or at least one signature and/or traceability information.

9. Computer program comprising instructions suitable for carrying out the steps of the method according to any one of the preceding claims when said program is executed on a computer.

10. Information storage means, removable or otherwise, that is partially or fully readable by a computer or a microprocessor, comprising code instructions of a computer program for executing the steps of the method according to any one of claims 1 to 8.

11. Server (2) suitable for executing the instructions suitable for carrying out the steps of the method according to any one of claims 1 to 8.
